# NOUVEAU FASCICULE DE BREVET EUROPEEN

(11) **EP 0 868 451 B2**
(45) Date de publication et mention de la décision concernant l'opposition: **30.06.2004**
(45) Mention de la délivrance du brevet: 23.02.2000
(21) Numéro de dépôt: 96934936.4
(22) Date de dépôt: 18.10.1996
(51) Int. Cl.: C08F 291/00, C08F 2/22, C08F 257/02, C09D 151/00

(54) **LATEX COMPOSITES A TRES FINE GRANULOMETRIE - LEUR APPLICATION AUX PEINTURES SANS SOLVANTS**
LATEXZUSAMMENSETZUNGEN AUS SEHR KLEINEN TEILCHEN, IHRE ANWENDUNG ZU ANSTRICHMASSEN OHNE LÖSUNGSMITTEL
FINELY PARTICULATE COMPOSITE LATICES AND USE THEREOF IN SOLVENT-FREE PAINTS

(30) Priorité: 25.10.1995 FR 9512568; 02.07.1996 FR 9608226
(43) Date de publication de la demande: 07.10.1998
(73) Titulaire: Atofina, 92800 Puteaux (FR)
(72) Inventeur: BETREMIEUX, Isabelle, F-27170 Beaumontel (FR); FERET, Bruno, F-92300 Levallois (FR); VERGE, Christophe, F-27170 Beaumontel (FR)
(74) Mandataire: Chaillot, Geneviève
(86) Numéro de dépôt international: PCT/FR1996/001633
(87) Numéro de publication internationale: WO 1997/015604

(56) Documents cités:
- EP-A- 0 173 300
- EP-A- 0 511 520
- EP-A- 0 574 803
- EP-A- 0 644 205
- EP-A- 0 675 177
- WO-A-95/04767
- CA-B- 814 528
- GB-A- 2 060 662
- US-A- 4 868 259
- DATABASE WPI Section Ch, Week 8041 Derwent Publications Ltd., London, GB; Class A13, AN 80-72537C XP002008042 & JP,A,55 112 215 (SEKISUI PLASTICS KK) , 30 Août 1980

## Description

### DOMAINE TECHNIQUE

La présente invention a trait au domaine de la fabrication de latex composites à tailles de particules particulièrement fines en l'absence de tensioactifs classiques, c'est-à-dire non polymériques, destinés à toutes les applications où une bonne imprégnation et une certaine hydrophobation sont nécessaires.

La finesse de dispersion est une qualité essentielle pour de telles applications, puisqu'elle conditionne leur faculté d'imprégnation du support. On s'accorde sur l'intérêt à pouvoir disposer de latex dont la taille des particules est comprise entre 30 nm et 150 nm.

### TECHNIQUE ANTERIEURE

Les latex que la pratique industrielle a consacrés, par exemple ceux qui sont rapportés dans la demande brevet allemand DE-25-46393, sont constitués de dispersions aqueuses résuttant des opérations successives suivantes :
1) Synthèse dans un milieu solvant (miscible à l'eau) d'un prépolymère (ci-après polymère A) à partir d'une combinaison de monomères hydrophobes et de monomères hydrophiles porteurs de fonctions acides carboxyliques ; neutralisation des fonctions acides et dilution dans l'eau du polymère A.
2) Polymérisation en émulsion d'un mélange de monomères hydrophobes (monomères B) composé de styrène et d'esters (méth)acryliques dans le milieu résultant de l'opération 1 ci-dessus.

On redoute cependant dans ces émulsions les effets parasites, entre autres la sensibilité à l'eau de l'émulsion après filmification, qu'y induit la présense de tensioactifs en particulier les tensioactifs non polymériques non ioniques tels les alcools gras éthoxylés, ou les tensioactifs non polymériques anioniques tels l'oléate de sodium ou le laurylsulfate de sodium comme on en rencontre par exemple dans le procédé divulgué dans le brevet US 4,868,259 (Goodyear). Par ailleurs, la réglementation tend de plus à écarter du marché les produits contenant des solvants organiques volatils. Or, en suivant les méthodes de polymérisation de l'art antérieur, il s'avère impossible, d'une part dans la phase de préparation du polymère A d'échapper à l'utilisation de solvants qui restent dans la préparation, et d'autre part d'obtenir d'aussi fines granulométries sans avoir recours à l'utilisation de quantités fort importantes de tensioactifs non polymériques.

### EXPOSE DE L'INVENTION

Les latex composites de la présente invention répondent à ces impératifs. Ce sont des latex dont le diamètre moyen des particules est compris entre 30 et 150 nm, qu'on réalise par polymérisation d'un mélange de monomères hydrophobes éthyléniquement insaturés, composé de styrène et d'esters (méth)acryliques, en émulsion dans une solution aqueuse d'un copolymère amphiphile hydrosoluble ou hydrodispersible de masse moléculaire moyenne en nombre (Mn) comprise entre 500 et 5.000 et dont l'indice d'acide est inférieur à 500, constitué lui-même d'une combinaison de monomères hydrophobes éthyléniquement insaturés, et d'anhydride maléique comme monomère hydrophile, ladite solution aqueuse de polymère amphiphile hydrosoluble étant exempte de tout autre tensioactif ou colloïde protecteur. Ce polymère dont la masse moléculaire est très sensiblement plus faible que celles des polymères A de l'art antérieur sera par la suite et pour la commodité du langage dénommé "l'oligomère". La polymérisation est effectuée en présence d'un amorceur radicalaire.

Des latex de ce type ont été divulgués dans EP-A-675177 (Goodrich). Ceux de la présente invention ont un pourcentage massique d'oligomère amphiphile par rapport à l'extrait sec final compris entre 10 et 50%, qui répond à un compromis entre les propriétés contradictoires l'oligomère et de celles des monomères soumis à polymérisation grâce auquel on peut maintenant disposer d'une dispersion de fines particules qui soit stable dans le temps et dont les films de coalescence ne soient pas trop sensibles à l'eau. L'analyse des latex obtenus selon l'invention fait ressortir que leur teneur en oligomère libre est inférieure à celle qu'on pourrait attendre si cet oligomère n'avait fonctionné que comme dispersant des monomères ou comme colloïde protecteur. On est habilité à penser qu'une partie de cet oligomère se trouve incorporée sur les particules qui constituent la phase dispersée du latex. Cette hypothèse est corroborée ' par la mesure de la température de transition des produits obtenus qui diffère nettement de celle qui serait attendue du simple copolymère des monomères hydrophobes soumis à polymérisation au sein de la solution de l'oligomère amphiphile. Le dosage de la phase aqueuse de la dispersion, exempt de particules de latex, obtenue après ultracentrifugation corrobore également cette hypothèse puisque seule une partie de l'oligomère de départ se trouve dans la phase aqueuse après cette étape de centrifugation. On a donc bien une partie de l'oligomère de départ fixée sur les particules de latex et c'est en ce sens que l'on a qualifié les latex de l'invention de latex composites.

Dans ces systèmes, les monomères hydrophobes soumis à polymérisation au sein de la solution de l'oligomère amphiphile, peuvent être, soit le styrène ou ses dérivés, un ester (méth)acrylique, parmi lesquels peuvent figurer des monomères fluorés provenant de l'estérification de l'acide (méth)acryiique par un alcool perfluoré, ou encore un mélange de ces monomères.

L'oligomère amphiphile est de préférence un copolymère d'un ou plusieurs monomères hydrophobes pris dans le groupe constitué par le styrène ou ses dérivés, l'isobutylène ou ses dérivés, les esters (méth)acryliques, et d'un ou plusieurs monomères hydrophiles pris dans le groupe constitué de l'acide(méth)acrylique et l'anhydride maléique, ce dernier pouvant être partiellement modifié par un alcool ou une amine, sous réserve qu'ainsi modifié, il reste hydrosoluble ou hydrodispersible en milieu aqueux. On préfère les copolymères styrène-anhydride maléique, dont la partie anhydride maléique est partiellement modifiée ou non par un alcool ou une amine, dont l'indice d'acide est compris entre 150 et 500, de préférence entre 200 à 300. On les obtient selon le procédé de copolymérisation en masse qui est décrit au brevet US 3,085,994 (SINCLAIR). On peut répondre à l'exigence d'indice d'acide modéré (au plus égal à 500) en faisant recours à des copolymères à teneur limitée en anhydride maléique. On peut aussi utiliser des résines modifiées par estérification ou amidation partielle de l'anhydride maléique. Pour l'estérification partielle, on préfère des alcools aliphatiques linéaires de C3 à C18, des alcools cycliques tels que le cyclohexanol, ou encore des alcools issus de l'éthérification de l'éthylène ou du propylène-glycol. Pour les amines modifiantes, on préfère les amines aliphatiques de C3 à C18, ou les amines cycliques telles que la cyclohexylamine, ou encore des amines porteuses à la fois d'une amine primaire et tertiaire telles que la diméthylaminopropylamine.

La polymérisation en émulsion des monomères hydrophobes est menée de façon classique en présence d'amorceurs hydrosolubles tels que les persulfates d'ammonium, de potassium ou de sodium, ou encore en présence de peroxyde d'hydrogène et de catalyseurs rédox. La température de polymérisation est comprise entre 40 et 90°C, de préférence entre 65 et 85°C. La concentration en matières solides est comprise entre 20 et 60 %, de préférence entre 25 et 45%. La polymérisation peut se faire selon un procédé en réacteur fermé ou en semi-continu. Dans le premier cas, les monomères ainsi que l'amorceur sont introduits en totalité dans la solution de l'oligomère A, dès le début de la polymérisation et le milieu est maintenu en température et sous agitation pendant une durée pouvant varier de 2 à 4 heures. Dans le second cas, deux pompes doseuses permettent d'introduire de façon continue, l'une, le mélange de monomères, l'autre, la solution d'amorceur, dans la solution de l'oligomère maintenue sous agitation et en température. La durée d'addition des monomères et de l'amorceur est comprise entre 30 minutes et 4 heures suivant la quantité et la nature des monomères à introduire. A la fin des coulées, le milieu est maintenu sous agitation et en température pendant une durée pouvant varier de 0 à 4 heures de façon à pousser à son terme la polymérisation des monomères.

La finesse de la dispersion des latex composites selon l'invention, ainsi que l'absence de tensioactif dans leur formulation les font très apprécier dans divers domaines d'applications où une bonne imprégnation du support ainsi qu'une certaine hydrophobie sont requises : collage du papier dans la masse ou en surface, finition du cuir ; traitement des textiles, peintures et lasures pour bois ; peintures pour bétons, ciments, plâtre, tuiles, métaux ; adjuvants pour ciments et mortiers, encres et vernis de surimpression ; adhésifs pour carrelages ; adjuvants pour ciment et mortier ; revêtements non pigmentés pour cuirs, métaux et matières plastiques. Ils constituent en particulier d'excellents agents de collage du papier dans la masse ou en surface et d'excellents auxiliaires de formulation de peintures sans solvant. Les peintures sans solvant incorporant comme auxiliaires filmogènes ces latex composites sont également des objets de la présente invention.

### EXEMPLES

Dans les exemples qui suivent, les tailles de particules ont été mesurées sur appareil Coulter N4SD. Les masses moléculaires ont été déterminées par GPC dans un milieu solvant THF + 5% d'acide acétique sur des colonnes chromatographiques de type "PL-Gel".

### EXEMPLE 1 : art antérieur (exemple 7 du brevet DE 2548393)

Dans un réacteur tricol en verre d'une capacité de 3 litres, muni d'une agitation mécanique, on introduit dans l'ordre 22,62 g d'acide acrylique, 40 g d'isopropanol, 80 g de styrène, 55 g d'une solution de diméthylformamide contenant 15 g d'anhydride maléique et 3 g d'azoisobutyronitrile (AIBN).

Le mélange est porté à 80°C sous azote et sous agitation, et maintenu ainsi pendant 5 heures. A la fin de cette période, on ajoute 650 ml d'eau et 45 ml d'une solution aqueuse d'ammoniaque à 28%. L'ensemble se dissout en 15 minutes environ à 70°C. On ajoute alors 15 g d'oléate de sodium à cette solution.

Ayant ainsi réalisé le copolymère A, on y introduit en continu à 85°C, sous azote et sous agitation, pendant deux heures environ, à l'aide d'une pompe doseuse, un mélange de 130 g de styrène et de 150 g d'acrylate de butyle ainsi qu'une solution de 5 g de (NH₄)₂S₂O₈ dans 100 g d'eau.

Le milieu réactionnel est maintenu encore 2 heures à 85°C, puis refroidi sous faible agitation. On obtient ainsi un latex composite dont les caractéristiques sont les suivantes :
Extrait sec = 35,5 %
Viscosité Brookfield à 23°C = 9.400 mPa.s
pH = 8,5
Diamètre moyen des particules = 434 nm.

On relève les caractéristiques négatives du latex composite obtenu dans cet exemple :
- taille de particules élevée > 100 nm,
- présence de tensioactif,
- présence de solvant organique.

### EXEMPLE 2 : (selon l'invention)

Dans un réacteur tricol en verre d'une capacité de 20 litres, muni d'une agitation mécanique, on introduit dans l'ordre 1.269 g d'un oligomère de masse moléculaire égale à 1.900, constitué de 74,3 % massique de styrène et 25,7 % massique d'anhydride maléique, 6.825 g d'eau déminéralisée et 500 g d'ammoniaque à 28 % dans l'eau. L'ensemble des réactifs est chauffé à 60°C et maintenu sous agitation jusqu'à la dissolution de l'oligomère. On porte la solution à 85°C, puis on ajoute sous azote et sous agitation, un mélange de 1.374 g de styrène et de 1.587 g d'acrylate de butyle ainsi qu'une solution de 52,9 g de (NH₄)₂S₂O₈ dans 1.057 g d'eau, en procédant en continu pendant deux heures à l'aide de pompes doseuses, dans la solution de l'oligomère préparée précédemment, à 85°C. Le milieu réactionnel est maintenu encore 2 heures à 85°C, puis refroidi sous faible agitation.

On obtient un latex dont les caractéristiques sont les suivantes:
Extrait sec = 23,5 %
Viscosité Brookfield à 23°C = 20 mPa.s
pH = 8,85
Diamètre moyen des particules = 55 nm
Tg = 25°C

On remarquera la finesse de la taille des particules par rapport à l'exemple 1 de l'art antérieur. On remarquera également que la Tg obtenue est sensiblement différente de celle du copolymère styrène/acrylate de butyle polymérisé dans les mêmes conditions mais en l'absence d'oligomère, qui fait l'objet de l'exemple 3.

### EXEMPLE 3: (contre-exemple)

Cet exemple a pour but de montrer la contribution essentielle de l'oligomère aux caractéristiques finales du latex composite. Il est réalisé dans les mêmes conditions que l'exemple 2, mais en présence de tensioactifs classiques non polymériques pour remplir la fonction dispersante dévolue à l'oligomère de l'invention.

Dans un réacteur tricol en verre d'une capacité de 20 litres, muni d'une agitation mécanique, sont introduits dans l'ordre 14.919 g d'eau déminéralisée, 80,13 g de polyéthylèneglycol iso-tridécyléther et 32,04 g de polyéthylèneglycol sodium sulfate lauryléther. L'ensemble des réactifs est agité à température ambiante jusqu'à l'obtention d'une solution homogène.

Après dissolution, on porte la température à 85°C, et sous azote et sous agitation, on introduit en continu pendant deux heures, un mélange de 1.374 g de styrène et de 1.587 g d'acrylate de butyle ainsi qu'une solution de 52,9 g de (NH₄)₂S₂O₈ dans 1.057 g d'eau. Le milieu réactionnel est maintenu encore 2 heures à 85°C, puis refroidi sous faible agitation. On obtient un latex dont les caractéristiques sont les suivantes :
Extrait sec = 19,5%
Viscosité Brookfield à 23°C = 15 mPa.s
pH = 1,85
Diamètre moyen des particules = 293 nm
Tg = 15°C

On remarquera que malgré la présence en quantité relativement importante de tensioactifs classiques par rapport aux monomères, on n'a pas obtenu une dispersion de particules particulièrement fines.

### EXEMPLE 4:

Cet exemple, ainsi que le suivant, a pour objet de montrer la flexibilité de la polymérisation de l'invention vis à vis des monomères introduits. Dans un réacteur tricol en verre d'une capacité de 20 litres, muni d'une agitation mécanique, on introduit dans l'ordre 1.269 g du même oligomère que dans l'exemple 2, 6.825 g d'eau déminéralisée et 500 g d'ammoniaque à 28 % dans l'eau L'ensemble des réactifs est chauffé à 60°C et maintenu sous agitation jusqu'à la dissolution du copolymère de faible masse à effet dispersant. On porte la solution à la température de 85°C, et sous azote et sous agitation, on y introduit en continu en deux heures, un mélange de 1.586 g de styrène, de 687 g d'acrylate de butyle et 687 g d'acrylate d'isobutyle, ainsi qu'une solution de 52,9 g de (NH₄)₂S₂O₈ dans 1.057 g d'eau. Le milieu réactionnel est maintenu encore 2 heures à 85°C, puis refroidi sous faible agitation.

On obtient un latex dont les caractéristiques sont les suivantes :
Extrait sec = 23,4 %
Viscosité Brookfield à 23°C = 15 mPa.s
pH = 8,8
Diamètre moyen des particules = 54 nm.

### EXEMPLE 5 :

Dans un réacteur tricol en verre d'une capacité de 3 litres, muni d'une agitation mécanique, on introduit dans l'ordre 120 g du même oligomère que dans l'exemple 2,1.150 g d'eau déminéralisée et 47,5 g d'ammoniaque à 28 % dans l'eau. L'ensemble des réactifs est chauffé à 60°C et maintenu sous agitation jusqu'à la dissolution du copolymère de faible masse à effet dispersant. L'ensemble des réactifs est porté à 60°C et maintenu sous agitation jusqu'à dissolution de l'oligomère. On porte alors la solution à la température de 85°C, et sous azote et agitation, puis on y introduit en continu en deux heures, un mélange de 140 g de styrène, de 70 g d'acrylate de butyle et 70 g d'acrylate de 2-éthyl-hexyle, ainsi qu'une solution de 5 g de (NH₄)₂S₂O₈ dans 100 g d'eau. Le milieu réactionnel est maintenu encore 2 heures à 85°C, puis refroidi sous faible agitation.

On obtient un latex dont les caractéristiques sont les suivantes :
Extrait sec = 24.5 %
Viscosité Brookfield à 23°C = 15 mPa.s
pH = 8,8
Diamètre moyen des particules = 46 nm.

### EXEMPLE 6 :

Cet exemple montre la possibilité d'utiliser comme oligomère un copolymère de type styrène-anhydride maléique estérifié de faible masse moléculaire.

Dans un réacteur tricol en verre d'une capacité de 3 litres, muni d'une agitation mécanique, on introduit dans l'ordre 120 g d'un oligomère (masse moléculaire égale à 1.900) formé de 66,5 % massique de styrène et 33,5 % massique d'anhydride maléique partiellement modifié par du n-propanol, 1.150 g d'eau déminéralisée et 32,5 g d'ammoniaque à 28 % dans l'eau. L'ensemble des réactifs est chauffé à 60°C et maintenu sous agitation jusqu'à la dissolution de l'oligomère. L'ensemble des réactif est porté à 60°C et maintenu sous agitation jusqu'à dissolution de l'oligomère. On porte alors la solution à la température de 85°C sous azote et sous agitation, puis on y introduit en continu en deux heures, un mélange de 130 g de styrène, de 150 g d'acrylate de butyle, ainsi qu'une solution de 5 g de (NH₄)₂S₂O₈ dans 100 g d'eau. Le milieu réactionnel est maintenu encore 2 heures à 85°C puis refroidi sous faible agitation.

On obtient un latex dont les caractéristiques sont les suivantes :
Extrait sec = 24,5%
Viscosité Brookfield à 23°C = 20 mPa.s
pH = 8,8
Diamètre moyen des particules = 85 nm.

### EXEMPLE 7 (exemple comparatif)

Cet exemple comparatif à l'exemple 2 a pour but de montrer l'influence de la masse moléculaire de l'oligomère sur les caractéristiques de la dispersion.

Dans un réacteur tricol en verre d'une capacité de 3 litres, muni d'une agitation mécanique, on introduit dans l'ordre 120 g d'un oligomère (masse moléculaire égale à 10.000) formé de 74,3% massique de styrène et 25,7 % massique d'anhydride maléique, 1.150 g d'eau déminéralisée et 32,5 g d'ammoniaque à 28 % dans l'eau. L'ensemble des réactifs est chauffé à 60°C et maintenu sous agitation jusqu'à la dissolution de l'oligomère. On porte alors la solution à la température de 85°C, et sous azote et agitation, puis on y introduit en continu en deux heures, un mélange de 130 g de styrène, de 150 g d'acrylate de butyle, ainsi qu'une solution de 5 g de (NH₄)₂S₂O₈ dans 100 g d'eau. Le milieu réactionnel est maintenu encore 2 heures à 85°C, puis refroidi sous faible agitation.

On obtient un latex dont les caractéristiques sont les suivantes :
Extrait sec = 24,5%
Diamètre moyen des particules = 234 nm.

On remarquera que bien que l'oligomère de départ présente la même composition chimique que celui de l'exemple 2, la différence de masse moléculaire entre les deux oligomères conduit à des dispersions de caractéristiques très différentes notamment au niveau de la taille des particules.

### EXEMPLE 8 : Application à la formulation de peintures mates sans solvant

On formule deux peintures selon la recette :

| | |
|---|---|
| Eau | 251,1 |
| Natrosol 250 HHR (épaississant cellulosique) | 4,0 |
| NOPCO 8034 (antimousse) | 2,2 |
| COATEX P90 (dispersant) | 1,9 |
| MERGAL KGN (bactéricide) | 1,4 |
| TiO2 RL 68 (pigment) | 110,0 |
| LUZENAC 20MO (talc - charge) | 50,0 |
| HYDROCARB (C03Ca - charge) | 200,0 |
| DURCAL 5 (C03Ca - charge) | 270,0 |
| Latex | 107,4 |
| NaOH (lessive à 20%) | 2,0 |

Les latex intervenant dans ces formules ont été réalisés selon le processus décrit aux exemples 4 à 6, la résine styrène/anhydride maléique comprenant 50,5% de styrène et 49,5% d'anhydride maléique de masse moléculaire Mn = 1.600, et d'indice d'acide compris entre 465 et 495. Les compositions des latex sont rapportées au tableau suivant, dans lequel le latex selon l'art antérieur est emprunté à EP-675177 (déjà cité). La partie "propriétés" du tableau met en relief l'un des avantages des latex selon l'invention, par rapport à un art antérieur mettant en oeuvre des rapports oligomère / extrait sec très élevés, d'autoriser la formulation de peintures douées d'une très basse température minimum de filmification (TMF), et donc filmant sans difficulté sous des climats froids ou tempérés. La TMF est mesurée sur banc Coesfeld selon la norme ISO 21/15. Pour l'exemple comparatif, la TMF excède les capacités expérimentales de la mesure.

| Composants (poids) | Latex selon l'invention | Latex selon l'art antérieur |
|---|---|---|
| Résine | 240 | 520 |
| Eau | 1100 | 840,4 |
| Ammoniaque à 28% | 136,8 | 296,4 |
| Styrène | 207,2 | 103,6 |
| Acrylate de butyle | 341,6 | 170,8 |
| Acide acrylique | 5,6 | 2,8 |
| Acrylamide | 5,6 | 2,8 |
| (NH₄)₂S₂O₈ | 10 | 5 |
| dans eau | 200 | 200 |
| Propriétés | | |
| Extrait sec % | 45,6 | 45,6 |
| Viscosité Brookfield | 2300 | 2800 |
| pH | 8,55 | 9,75 |
| Diamètre moyen | 127 nm | 72 nm |
| TMF | < 0°C | > 73°C |
| Tg écorce | 170°C | 170°C |
| Tg coeur | 8°C | 10°C |

Ces peintures mates ont été évaluées en abrasion humide selon la norme DIN 53778/2, sur films de 90 à 100 µm d'épaisseur, après séchage 8 jours à 23°C sous 50 % d'humidité relative. Les résultats obtenus sont reportés ci-après.

| Référence du latex | Résistance en cycles |
|---|---|
| selon l'invention | 482 |
| selon l'art antérieur | 300 |

### EXEMPLE 9 : Application à la formulation de peintures satinées sans solvant.

On formule deux peintures selon la recette :

| | |
|---|---|
| Eau | 137,9 |
| Natrosol Plus 430 (épaississant cellulosique) | 1,0 |
| NOPCO 8034 (antimousse) | 3,0 |
| COATEX P90 (dispersant) | 5,0 |
| ACTICIDE BX (bactéricide) | 2,0 |
| TiO2 RHD2 (pigment) | 226,0 |
| LUZENAC 20MO (Talc - charge) | 50,0 |
| DURCAL 2(C03Ca - charge) | 61,6 |
| DURCAL 5 (C03Ca - charge) | 41,1 |
| Latex | 516,1 |
| RHEOLATE 278 (épaississant) | 5,1 |
| NH4OH (solution aqueuse à 28%) | 1,0 |

Les latex intervenant dans ces formules sont ceux de l'exemple précédent (exemple 8).

Ces peintures satinées ont été caractérisées par mesures de filmification à 5°C, de collant superficiel et de brillant à 60°C.

L'aptitude des peinture à former un film à 5°C est évaluée de la façon suivante. La formulation de peinture est appliquée sur une plaque de verre en épaisseur de 300 µm. La plaque est ensuite abandonnée à 5°C, 70% d'humidité relative pendant 18 heures, afin que la formation du film s'opère dans des conditions extrêmes d'utilisation. Une heure après retour à la température ambiante (20°C), on observe à l'oeil nu la présence éventuelle de craquelures. Une bonne aptitude à la formation d'un film est déduite de l'absence de craquelures. La brillance est évaluée par réflexion de la lumière selon la norme DIN 53778, sous angle de 60°.

Le collant superficiel est évalué comme on l'indique maintenant. La peinture à tester est appliquée sur une carte contraste noir et blanc de type Leneta, avec un applicateur haltère (Bird) sous une épaisseur de 200 µm. On prépare six cartes, correspondant à trois essais. Après quatre heures de séchage en étuve climatique à 23°C, 50% HR, les cartes sont mises en contact deux par deux, face peinte contre face peinte, et placées en sandwich entre deux plaques de verre dépoli (taille 75×100mm). Le sandwich est disposé à plat et on le charge d'un poids de 3.750 grammes (50 g/cm²). Le tout est placé dans une pièce à 23°C, 50% HR pendant 24 heures. On sépare alors les paires en tirant régulièrement.

La notation se fait selon l'échelle de collant superficiel de 0 (excellent) à 8 (collant superficiel nul):
0 aucun accrochage, aucun bruit lors de la séparation des cartes (les cartes glissent entre elles)
1 bruit, mais aucune altération des surfaces
2 moins de 10 points d'arrachement sur toute la surface
3 moins de 50 points d'arrachement
4 plus de 50 points d'arrachement, mais pas d'arrachement local important
5 arrachement local du carton, sur moins de 50% de la surface totale
6 arrachement local du carton, de 20 à 50%
7 arrachement local du carton, supérieur à 50%
8 arrachement du carton sur toute la surface.

Les résultats obtenus pour ces trois tests sont reportés ci-après.

| Peinture | Filmification | Brillant | Collant |
|---|---|---|---|
| selon l'invention | bonne | 19,5% | 0 |
| selon l'art antérieur | médiocre | 19,0% | 0 |

Ces résultats témoignent d'un bon comportement des deux peintures testées en ce qui concerne la brillance et le collant. Mais l'avantage est évident à la peinture qui présence ces qualités lorsqu'en outre elle forme facilement son film à basse température.

## Revendications

1. Latex composite dont le diamètre moyen des particules est compris entre 30 et 150 nm tel que résultant de la polymérisation d'un mélange de monomères hydrophobes composé de styrène et d'esters (méth)acryliques en émulsion dans une solution aqueuse d'un copolymère amphiphile hydrosoluble ou hydrodispersible de masse moléculaire moyenne en nombre comprise entre 500 et 5 000 et dont l'indice d'acide est inférieur à 500, constitué d'une combinaison de monomères hydrophobes et d'anhydride maléique comme monomère hydrophile, en présence d'un amorceur radicalaire, **caractérisé en ce que** ladite solution aqueuse de polymère amphiphile hydrosoluble est exempte de tout autre tensioactif ou colloïde protecteur et que le pourcentage massique de copolymère amphiphile par rapport à l'extrait sec du latex est compris entre 10 et 50%.

2. Latex composite selon la revendication 1, **caractérisé en ce que** le copolymère de masse moléculaire moyenne en nombre comprise entre 500 et 5 000 est un copolymère d'un ou plusieurs monomères hydrophobes pris dans le groupe constitué par le styrène ou ses dérivés, l'isobutylène ou ses dérivés, les esters (méth)acryliques et l'anhydride maléique, ce dernier pouvant être partiellement modifié par un alcool ou une amine tout en restant hydrosoluble ou hydrodispersible en milieu aqueux.

3. Latex composite selon la revendication 1, **caractérisé en ce que** le copolymère de masse moléculaire moyenne en nombre comprise entre 500 et 5 000 est un copolymère de styrène et d'anhydride maléique.

4. Latex composite selon la revendication 1, **caractérisé en ce que** le copolymère de masse moléculaire moyenne en nombre comprise entre 500 et 5 000 est un copolymère de styrène et d'anhydride maléique modifié par estérification partielle à l'aide d'alcools aliphatiques linéaires de C3 à C18, ou d'alcools cycliques tels que le cyclohexanol, ou d'alcools issus de l'éthérification de l'éthylène ou du propylène glycol.

5. Latex composite selon la revendication 1, **caractérisé en ce que** le copolymère de masse moléculaire moyenne en nombre comprise entre 500 et 5 000 est un copolymère de styrène et d'anhydride maléique modifié par amidation partielle à l'aide d'amines aliphatiques de C3 à C18, ou d'amines cycliques telles que la cyclohexylamine, ou d'amines porteuses à la fois d'une amine primaire et tertiaire, telle la diméthylaminopropylamine.

6. Latex composite selon la revendication 1, **caractérisé en ce que** les monomères hydrophobes sont pris dans le groupe constitué par le styrène et ses dérivés, les esters (méth)acryliques, y compris les esters (méth)acryliques fluorés résultant de l'estérification de l'acide (méth)acrylique par un alcool perfluoré, ou un mélange de ces comonomères.

7. Application de latex composites selon les revendications 1 à 6 à la réalisation de peintures sans solvant.

## Patentansprüche

1. Latex-Zusammensetzung, deren Teilchen einen mittleren Durchmesser zwischen 30 und 150 nm aufweisen, wie sie bei der Polymerisation eines Gemisches aus hydrophoben Monomeren, bestehend aus Styrol und (Meth)acrylsäureestern in Emulsion in einer wäßrigen Lösung eines in Wasser löslichen oder dispergierbaren amphiphilen Copolymeren mit einem Zahlenmittel der Molmasse zwischen 500 und 5.000 und einer Säurezahl kleiner als 500, bestehend aus einer Kombination von hydrophoben Monomeren und Maleinsäureanhydrid als hydrophilem Monomeren, in Gegenwart eines Radikal-Starters resultieren, **dadurch gekennzeichnet, daß** die genannte wäßrige Lösung des wasserlöslichen amphiphilen Polymeren frei von allen anderen Tensiden oder Schutzkolloiden ist und daß der Massenanteil des amphiphilen Copolymeren, bezogen auf die Trockensubstanz des Latex, zwischen 10 und 50 % liegt.

2. Latex-Zusammensetzung nach Anspruch 1, **dadurch gekennzeichnet, daß** das Copolymere mit einem Zahlenmittel der Molmasse zwischen 500 und 5.000 ein Copolymeres eines oder mehrerer hydrophober Monomeren der Gruppe von Styrol oder seinen Derivaten, Isobuten oder seinen Derivaten, den (Meth)acrylsäureestern und Maleinsäureanhydrid ist, wobei letzteres teilweise durch einen Alkohol oder ein Amin modifiziert sein kann, wobei es in einem wäßrigen Medium wasserlöslich oder dispergierbar bleibt.

3. Latex-Zusammensetzung nach Anspruch 1, **dadurch gekennzeichnet, daß** das Copolymere mit einem Zahlenmittel der Molmasse zwischen 500 und 5.000 ein Copolymeres aus Styrol und Maleinsäureanhydrid ist.

4. Latex-Zusammensetzung nach Anspruch 1, **dadurch gekennzeichnet, daß** das Copolymere mit einem Zahlenmittel der Molmasse zwischen 500 und 5.000 ein Copolymeres von Styrol und Maleinsäureanhydrid ist, das durch teilweise Veresterung mit Hilfe von aliphatischen linearen Alkoholen mit C₃-C₁₈, cyclischen Alkoholen wie Cyclohexanol oder der durch die Veresterung von Ethylen oder Propylenglykol entstandenen Alkohole modifiziert ist.

5. Latex-Zusammensetzung nach Anspruch 1, **dadurch gekennzeichnet, daß** das Copolymere mit einem Zahlenmittel der Molmasse zwischen 500 und 5.000 ein Copolymeres von Styrol und Maleinsäureanhydrid ist, das durch teilweise Amidierung mit Hilfe von aliphatischen Aminen mit C₃-C₁₈, cyclischen Aminen wie Cyclohexylamin oder Aminen mit gleichzeitig einer primären und tertiären Amingruppe wie Dimethylaminopropylamin modifiziert ist.

6. Latex-Zusammensetzung nach Anspruch 1, **dadurch gekennzeichnet, daß** die hydrophoben Monomeren zu der aus Styrol und seinen Derivaten und den (Meth)acrylsäureestern einschließlich den fluorierten, aus der Veresterung von (Meth)acrylsäure mit einem perfluorierten Alkohol entstandenen (Meth)acrylsäureester oder einem Gemisch dieser Monomeren bestehenden Gruppe gehören.

7. Verwendung von Latex-Zusammensetzungen nach den Ansprüchen 1 bis 6 bei der Herstellung von Farben ohne Lösungsmittel.

## Claims

1. Composite latex whose average particle diameter is between 30 and 150 nm, as resulting from the polymerization of a mixture of hydrophobic monomers composed of styrene and (meth)acrylic esters in emulsion in an aqueous solution of a water-soluble or water-dispersible amphiphilic copolymer with a number-average molecular mass of between 500 and 5000 and with an acid number of less than 500, consisting of a combination of hydrophobic monomers and of maleic anhydride as hydrophilic monomer, in the presence of a radical initiator, **characterized in that** the said aqueous solution of water-soluble amphiphilic polymer is free of any other protective colloid or surfactant and that the percentage by mass of amphiphilic copolymer relative to the solids content of the latex is between 10 and 50%.

2. Composite latex according to Claim 1, **characterized in that** the copolymer with a number-average molecular mass of between 500 and 5000 is a copolymer of one or more hydrophobic monomers taken from the group consisting of styrene or derivatives thereof, isobutylene or derivatives thereof, (meth)acrylic esters and maleic anhydride, it being possible for the latter monomer to be partially modified with an alcohol or an amine while at the same time remaining water-soluble or water-dispersible in aqueous medium.

3. Composite latex according to Claim 1, **characterized in that** the copolymer with a number-average molecular mass of between 500 and 5000 is a copolymer of styrene and maleic anhydride.

4. Composite latex according to Claim 1, **characterized in that** the copolymer with a number-average molecular mass of between 500 and 5000 is a copolymer of styrene and maleic anhydride, modified by partial esterification using linear C3 to C18 aliphatic alcohols, or using cyclic alcohols such as cyclohexanol, or using alcohols derived from the etherification of ethylene or propylene glycol.

5. Composite latex according to Claim 1, **characterized in that** the copolymer with a number-average molecular mass of between 500 and 5000 is a copolymer of styrene and maleic anhydride modified by partial amidation using C3 to C18 aliphatic amines, or using cyclic amines such as cyclohexylamine, or using amines bearing both a primary amine and a tertiary amine, such as dimethylaminopropylamine.

6. Composite latex according to Claim 1, **characterized in that** the hydrophobic monomers are taken from the group consisting of styrene and derivatives thereof, (meth)acrylic esters, including (meth)acrylic fluoro esters resulting from the esterification of (meth)acrylic acid with a perfluoro alcohol, or a mixture of these comonomers.

7. Application of composite latices according to Claims 1 to 6 in the production of solvent-free paints.
